# EUROPÄISCHE PATENTSCHRIFT

(11) **EP 0 681 253 B1**
(45) Veröffentlichungstag und Bekanntmachung des Hinweises auf die Patenterteilung: **30.06.1999**
(21) Anmeldenummer: 94107176.3
(22) Anmeldetag: 07.05.1994
(51) Int. Cl.: G06K 7/08

(54) **Vorrichtung zum Beschreiben von kartenförmigen Datenträgern**
Device for recording card-shaped data carriers
Dispositif d'insciption sur un support de donnees en forme de cartes

(43) Veröffentlichungstag der Anmeldung: 08.11.1995
(73) Patentinhaber: SCHEIDT & BACHMANN GMBH, D-41238 Mönchengladbach (DE)
(72) Erfinder: Miller, Gert, Dipl.-Ing., D-41063 Mönchengladbach (DE)
(74) Vertreter: Stenger, Watzke & Ring Patentanwälte

(56) Entgegenhaltungen:
- GB-A- 2 157 867
- US-A- 3 869 718
- US-A- 4 002 887

## Beschreibung

Die Erfindung betrifft eine Vorrichtung zum Beschreiben von kartenförmigen Datenträgern mit mindestens einem Magnetstreifen, der auf der Ober- oder Unterseite mittig oder seitlich versetzt angeordnet ist, mit einem Kartenschacht, in dem mindestens zwei einander gegenüberliegende Schreibköpfe für das Beschreiben mindestens eines auf der Oberseite bzw. der Unterseite des kartenförmigen Kartenträgers angeordneten Magnetstreifens, mindestens ein Lesekopf und mindestens an einem Ende des Kartenschachtes ein Sensor angeordnet sind.

Um bei jeder Eingabe des kartenförmigen Datenträgers in den Kartenschacht unabhängig von der ordnungsgemäßen Zuordnung von Oberseite und Unterseite den bzw. die Magnetstreifen beschreiben zu können, werden anstelle eines zwei einander gegenüberliegende Schreibköpfe im Kartenschacht angeordnet. Die paarweise einander gegenüberliegend angeordneten Schreibköpfe werden bei den bekannten Vorrichtungen gleichzeitig angesteuert, so daß der Magnetstreifen auch bei einer hinsichtlich Oberseite und Unterseite vertauschten Einführung des kartenförmigen Datenträgers in den Kartenschacht beschrieben wird.

Bei dieser bekannten Anordnung von paarweise einander gegenüberliegenden Schreibköpfen besteht die Gefahr, daß sich die gegeneinander gerichteten Magnetfelder der gleichzeitig angesteuerten Schreibköpfe mehr oder weniger stark beeinflussen, so daß die auf den Magnetstreifen des kartenförmigen Datenträgers geschriebenen Informationen verfälscht werden können.

Vorrichtungen gemäß dem Oberbegriff von Anspruch 1 zum Beschreiben von kartenförmigen Datenträgern für Warenverkaufs- und Dienstleistungsautomaten sind bekannt, beispielsweise aus EP 0 521 172 A1.

Der Erfindung liegt die **Aufgabe** zugrunde, eine solche Vorrichtung zum Beschreiben von kartenförmigen Datenträgern ohne Beeinträchtigung der einfachen Handhabung für den Benutzer derart weiterzuentwickeln, daß eine Verfälschung der aufzuschreibenden Informationen vermieden wird, auch wenn einander gegenüberliegenden Schreibköpfe verwendet werden.

Die **Lösung** dieser Aufgabenstellung durch die Erfindung ist dadurch gekennzeichnet, daß im Einzugsbereich des Kartenschachtes auf mindestens einer Seite für jeden Magnetstreifen der zur Verarbeitung zugelassenen Datenträger ein Sensor zur Erkennung eines Magnetstreifens angeordnet ist, der beim Erkennen eines Magnetstreifens den diesem Magnetstreifen jeweils auf der anderen Seite des Kartenschachtes gegenüberliegenden Schreibkopf unwirksam schaltet.

Falls hingegen dieser Sensor keinen Magnetstreifen erkennt, erfolgt eine Ausschaltung des auf derselben Seite wie der Sensor befindlichen Schreibkopfes.

Mit der erfindungsgemäßen Weiterbildung wird sichergestellt, daß unabhängig von der ordnungsgemäßen oder hinsichtlich Oberseite und Unterseite vertauschten Eingabe des kartenförmigen Datenträgers in den Kartenschacht jeweils nur derjenige Schreibkopf angesteuert wird, dem bei der jeweiligen Eingabe des kartenförmigen Datenträgers ein Magnetstreifen zugeordnet ist. Der jeweils andere, auf der gegenüberliegenden Seite des Kartenschachtes angeordnete Schreibkopf wird unwirksam geschaltet, so daß er die auf den Magnetstreifen aufzubringenden Daten nicht verfälschen kann.

Sofern nur ein Sensor zur Erkennung eines Magnetstreifens im Einzugsbereichs des Kartenschachtes für den jeweiligen Magnetstreifen angeordnet ist, erfolgt bei Erkennung eines Magnetstreifens durch diesen Sensor ein Ausschalten des auf der anderen Seite des Kartenschachtes angeordneten Schreibkopfes; wird durch diesen Sensor kein Magnetstreifen erkannt, erfolgt eine Ausschaltung des auf derselben Seite wie der Sensor angeordneten Schreibkopfes. In diesem Fall wird durch den nachgeschalteten Lesekopf geprüft, ob Daten auf dem als existent unterstellten Magnetstreifen vorhanden sind. Ist dies nicht der Fall, wird der Datenträger als unzulässig zurückgegeben. Entweder handelt es sich in diesem Fall um keine oder keine zulässige Magnetkarte oder um eine Karte mit defektem Magnetstreifen.

Sofern unmittelbar beim Eintritt des Datenträgers in den Kartenschacht festgestellt werden soll, ob es sich um einen für die Vorrichtung zugelassenen Datenträger handelt, können gemäß einem weiteren Merkmal der Erfindung jeweils paarweise gegenüberliegende Sensoren zur Erkennung von Magnetstreifen im Einzugsbereich des Kartenschachtes angeordnet werden. Vorzugsweise werden diese Sensoren als Tonköpfe ausgebildet. Der jeweils einen Magnetstreifen erkennende Sensor schaltet den jeweils auf der anderen Seite des Kartenschachtes angeordneten Schreibkopf unwirksam.

Um die Abgabe verfälschter Signale vom jeweils unwirksam geschalteten Schreibkopf zu vermeiden, wird mit der Erfindung schließlich vorgeschlagen, die Ausschaltung des jeweiligen Schreibkopfes in dessen unmittelbarer Nähe vorzunehmen.

Auf der Zeichnung sind ein Ausführungsbeispiel der erfindungsgemäßen Vorrichtung und drei Ausführungsbeispiele für mit dieser Vorrichtung zu verarbeitende kartenförmige Datenträger dargestellt, und zwar zeigen:
- Fig. 1: eine Stirnansicht der Vorrichtung,
- Fig. 2: eine Seitenansicht der Vorrichtung nach Fig. 1,
- Fig. 3: die andere Seitenansicht der Vorrichtung nach Fig. 1,
- Fig. 4: ein erstes Ausführungsbeispiel eines kartenförmigen Datenträgers mit einem mittigen Magnetstreifen,
- Fig. 5: ein zweites Ausführungsbeispiel eines derartigen Datenträgers mit jeweils einem seitlich versetzt auf der Oberseite und auf der Unterseite angeordneten Magnetstreifen,
- Fig. 6: eine Ansicht der Oberseite und
- Fig. 7: eine Ansicht der Unterseite eines dritten Ausführungsbeispiels eines kartenförmigen Datenträgers, der auf der Oberseite mit zwei seitlich versetzten Magnetstreifen und auf der Unterseite mit einem mittigen Magnetstreifen versehen ist.

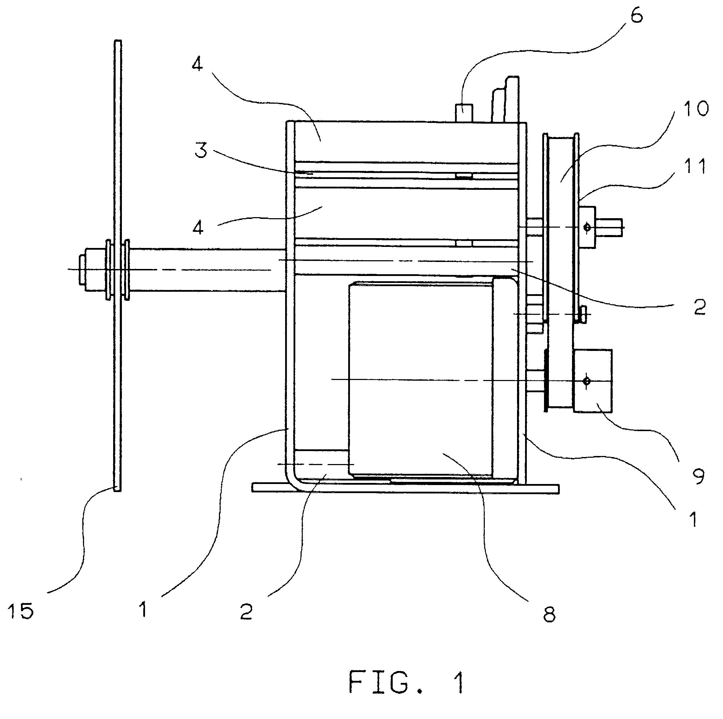

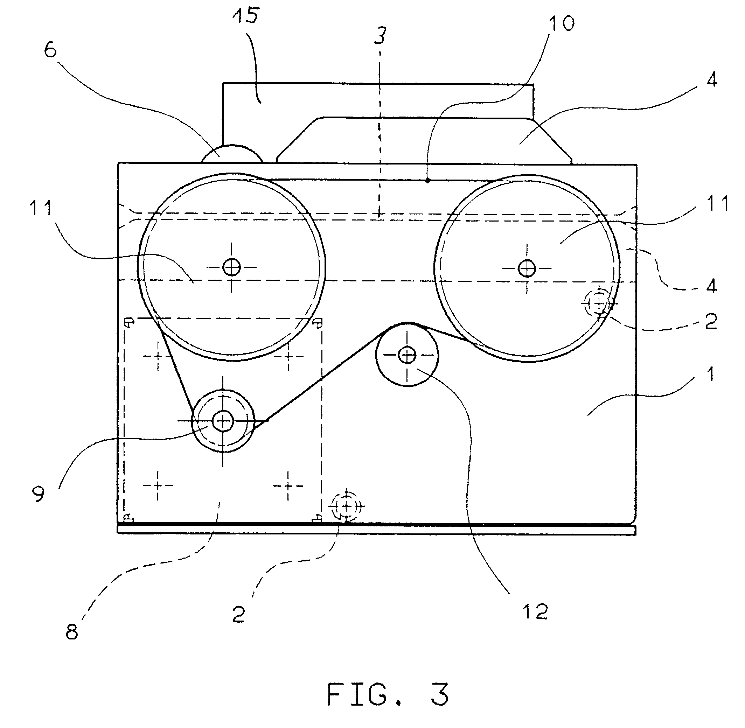

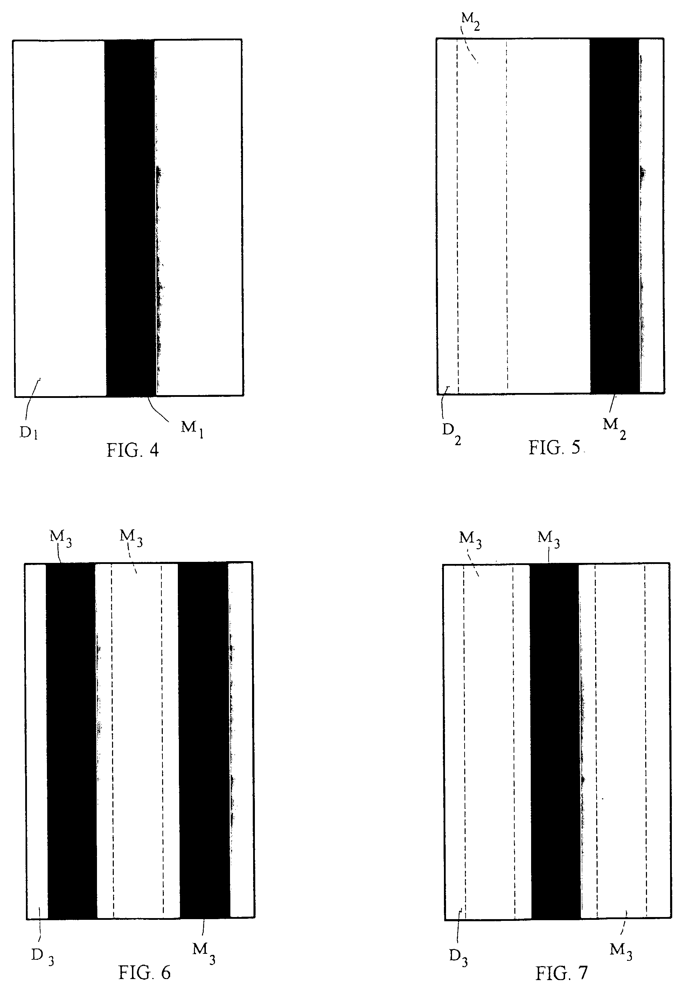

Die in den Fig. 1 bis 3 dargestellte Vorrichtung zum Beschreiben und Lesen von kartenförmigen Datenträgern D ist der besseren Übersichtigkeit wegen zur Verarbeitung von Datenträgern gemäß Fig. 4 bestimmt. Bei diesem Ausführungsbeispiel ist der kartenförmige Datenträger D₁ nur auf einer Seite mittig mit einem Magnetstreifen M₁ versehen. Selbstverständlich kann die Vorrichtung auch zum Beschreiben und Lesen von Datenträgern D₂ sowie D₃ vorgesehen werden, die eine andere Anordnung der Magnetstreifen M aufweisen.

Beim Ausführungsbeispiel nach Fig. 5 ist der kartenförmige Datenträger D₂ sowohl auf der Oberseite als auch auf der Unterseite jeweils mit einem seitlich versetzt angeordneten Magnetstreifen M₂ versehen. Das dritte Ausführungsbeispiel nach den Fig. 6 und 7 zeigt einen kartenförmigen Datenträger D₃, der gemäß Fig. 6 auf der Oberseite mit zwei seitlich versetzt angeordneten Magnetstreifen M₃ und auf der Unterseite gemäß Fig. 7 mit einem mittig angeordneten weiteren Magnetstreifen M₃ ausgestattet ist.

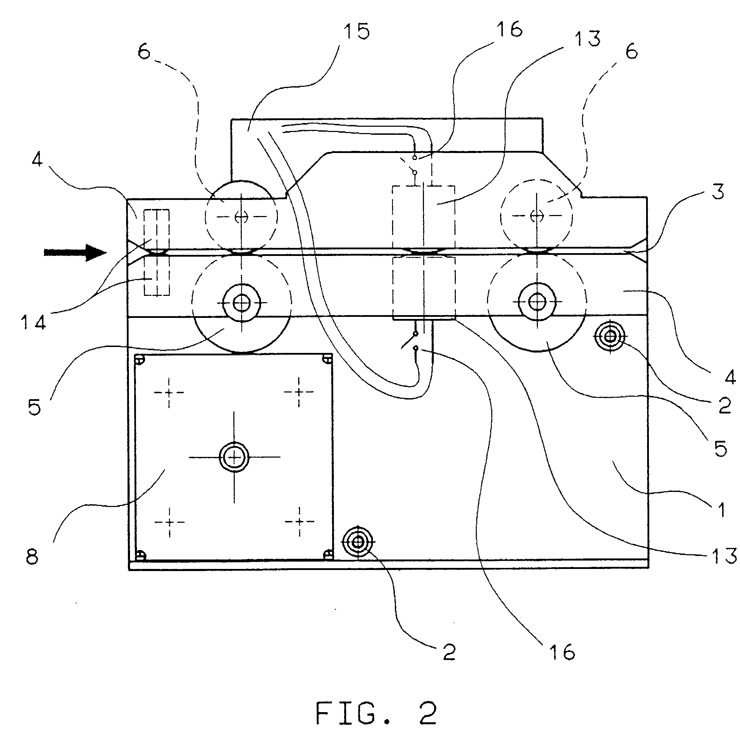

Bei dem in den Fig. 1 bis 3 dargestellten Ausführungsbeispiel umfaßt die Vorrichtung zwei Seitenwände 1, die durch Distanzstangen 2 im Abstand voneinander miteinander verbunden sind. Innerhalb des hierdurch gebildeten Gehäuses ist ein Kartenschacht 3 durch Führungen 4 ausgebildet. Dieser Kartenschacht 3 ist am besten in Fig. 2 zu erkennen, in der auch die Eingaberichtung der kartenförmigen Datenträger D durch einen Pfeil angedeutet ist.

In den Kartenschacht 3 ragen von unten zwei Antriebsrollen 5 hinein, welche jeweils mit einer oberhalb des Kartenschachtes 3 frei drehbar gelagerten Andruckrolle 6 zusammenwirken. Beide Andruckrollen 6 werden in Richtung auf die zugehörige Antriebsrolle 5 durch eine Andrückfeder belastet.

Der Antrieb der Antriebsrollen 5 erfolgt durch einen Schrittmotor 8, auf dessen Welle ein Antriebsritzel 9 für einen Zahnriemen 10 befestigt ist. Der Zahnriemen 10 ist über zwei Zahnriemenritzel 11 geführt, die jeweils auf der Welle der Antriebsrollen 5 befestigt sind. Um eine gleichmäßige Spannung des Zahnriemens 10 zu erzielen, ist schließlich eine Spannrolle 12 vorgesehen. Mit Hilfe des vorstehend beschriebenen Antriebes kann ein kartenförmiger Datenträger D mit gleichförmiger Bewegung in beiden Richtungen innerhalb des Kartenschachtes 3 transportiert werden.

Innerhalb des Kartenschachtes 3 sind beim Ausführungsbeispiel einander gegenüberliegend zwei Schreibköpfe 13 zum Beschreiben des mittig angeordneten Magnetstreifens M₁ des Datenträgers D₁ nach Fig. 4 angeordnet. Bei diesen Köpfen kann es sich auch um in einem Gehäuse angeordnete Schreib- und Leseköpfe handeln. Im Einzugsbereich des Kartenschachtes 3 sind diesen Schreibköpfen 13 jeweils Sensoren 14 zugeordnet. Diese sind beim Ausführungsbeispiel paarweise angeordnet. Sie werden vorzugsweise als Tonköpfe ausgebildet.

Beim Einziehen eines Datenträgers D₁ erkennt beispielsweise der obere Sensor 14 einen Magnetstreifen M₁, wogegen der untere Sensor 14 keinen Magnetstreifen feststellt. In diesem Fall wird durch eine auf einer Leiterplatte 15 angeordnete Auswertschaltung der untere Schreibkopf 13 unwirksam geschaltet, so daß durch dessen Magnetfeld keine Verfälschung der durch den oberen Schreibkopf 13 auf den Magnetstreifen M₁ aufgebrachten Daten erfolgen kann.

Das Unwirksamschalten des jeweiligen Schreibkopfes 13 erfolgt durch Unterbrechung der Zuleitung zum Kopf in dessen unmittelbarer Nähe. In Fig. 2 sind zu diesem Zweck symbolisch Relaiskontakte 16 eingezeichnet, die geöffnet werden, wenn der jeweilige Schreibkopf 13 unwirksam geschaltet wird. Diese Relaiskontakte 16 sind über Leitungen 17 mit der Leiterplatte 15 verbunden. Selbstverständlich muß das Mittel zur Unwirksamschaltung des jeweiligen Schreibkopfes 13 kein Relaiskontakt sein; es können beliebige elektrische, elektronische oder optische Bauelemente verwendet werden.

Sofern Datenträger D₂ oder D₃ mit mehreren Magnetstreifen M₂ bzw. M₃ verarbeitet werden sollen, wird eine entsprechend größere Anzahl von Sensoren 14 im Einzugsbereich des Kartenschachtes 3 angeordnet. Hierbei ist es - wie beim Ausführungsbeispiel - möglich, die Sensoren 14 paarweise gegenüberliegend anzuordnen. Wie bereits eingangs erwähnt besteht jedoch auch die Möglichkeit, jeweils nur einen Sensor 14 für jeden Magnetstreifen M₂ oder M₃ der jeweils zur Verarbeitung zugelassenen Datenträger D₂ bzw. D₃ vorzusehen.

### Bezugszeichenliste :

- D: Datenträger
- M: Magnetstreifen
- 1: Seitenwand
- 2: Distanzstange
- 3: Kartenschacht
- 4: Führung
- 5: Antriebsrolle
- 6: Andruckrolle
- 8: Schrittmotor
- 9: Antriebsritzel
- 10: Zahnriemen
- 11: Zahnriemenritzel
- 12: Spannrolle
- 13: Schreibkopf
- 14: Sensor
- 15: Leiterplatte
- 16: Relaiskontakt
- 17: Leitung

## Patentansprüche

1. Vorrichtung zum Beschreiben von kartenförmigen Datenträgern (D) mit mindestens einem Magnetstreifen (M), der auf der Ober- oder Unterseite des Datenträgers mittig oder seitlich versetzt angeordnet ist, mit einem Kartenschacht (3), in dem mindestens ein Lesekopf und mindestens an einem Ende des Kartenschachtes (3) ein Sensor angeordnet sind,
**dadurch gekennnzeichnet,**
daß im Kartenschacht mindestens zwei einander gegenüberliegende Schreibköpfe (13) für das Beschreiben eines auf der Oberseite bzw. der Unterseite des kartenförmigen Datenträgers (D) angeordneten Magnetstreifens (M) angebracht sind, und
daß im Einzugsbereich des Kartenschachtes (3) auf mindestens einer Seite für jeden Magnetstreifen (M) der zur Verarbeitung zugelassenen Datenträger (D) ein Sensor (14) zur Erkennung eines Magnetstreifens (M) angeordnet ist, der einerseits beim Erkennen eines Magnetstreifens (M) den diesem Magnetstreifen (M) jeweils auf der anderen Seite des Kartenschachtes (3) gegenüberliegenden Schreibkopf (13) unwirksam schaltet, während andererseits eine Ausschaltung des auf derselben Seite wie der Sensor (14) angebrachten Schreibkopfes (13) erfolgt, falls dieser Sensor (14) keinen Magnetstreifen (M) erkennt.

2. Vorrichtung nach Anspruch 1, dadurch gekennzeichnet, daß jeweils paarweise gegenüberliegende Sensoren (14) zum Erkennen von Magnetstreifen (M) im Einzugsbereich des Kartenschachtes (3) angeordnet sind.

3. Vorrichtung nach Anspruch 1 oder 2, dadurch gekennzeichnet, daß der Sensor (14) als Tonkopf ausgebildet ist.

4. Vorrichtung nach mindestens einem der Ansprüche 1 bis 3, dadurch gekennzeichnet, daß die Ausschaltung des jeweiligen Schreibkopfes (13) dadurch erfolgt, daß seine Zuleitung in dessen unmittelbarer Nähe unterbrochen wird.

## Claims

1. Apparatus for writing on data carriers (D) in card form and having at least one magnetic strip (M), which is arranged centrally or laterally offset on the top side or underside of the data carrier, having a card shaft (3), in which at least one read head and, at least at one end of the card shaft (3), a sensor are arranged,
characterized
in that at least two mutually opposite write heads (13) for writing on a magnetic strip (M) arranged on the top side or underside of the data carrier (D) in card form are fitted in the card shaft, and
in that a sensor (14) for identifying a magnetic strip (M) is arranged in the pull-in region of the card shaft (3) on at least one side for each magnetic strip (M) of the data carriers (D) which are admitted for processing, which sensor, on the one hand, upon identifying a magnetic strip (M), deactivates the write head (13) situated opposite to this magnetic strip (M) in each case on the other side of the card shaft (3), whereas, on the other hand, the write head (13) fitted on the same side as the sensor (14) is switched off if this sensor (14) does not identify a magnetic strip (M).

2. Apparatus according to Claim 1, characterized in that sensors (14) which are respectively opposite one another in pairs and serve to identify magnetic strips (M) are arranged in the pull-in region of the card shaft (3).

3. Apparatus according to Claim 1 or 2, characterized in that the sensor (14) is designed as a sound head.

4. Apparatus according to at least one of Claims 1 to 3, characterized in that the respective write head (13) is switched off by its supply line being interrupted in the immediate vicinity of the said write head.

## Revendications

1. Dispositif d'inscription sur un support de données (D) en forme de carte, avec au moins une bande magnétique (M) disposée centralement ou décalée latéralement sur la face supérieure ou inférieure du support de données, avec un puits à cartes dans lequel au moins une tête de lecture et au moins un capteur sont disposés à une extrémité du puits à cartes (3), caractérisé en ce que dans le puits à cartes, au moins deux têtes d'écriture (13) mutuellement opposées sont montées pour écrire sur une bande magnétique (M) disposée sur la face supérieure ou la face inférieure du support de données (D) en forme de cartes et, dans la zone d'insertion du puits à cartes (3), sur au moins un côté pour chaque bande magnétique (M) des supports de données (D) admis au traitement, est disposé un capteur (14) destiné à l'identification d'une bande magnétique (M), capteur qui, d'une part, lors de l'identification d'une bande magnétique (M), fait passer chaque fois à l'état inactif la tête de lecture (13) opposée à cette bande magnétique (M) et placée sur l'autre face du puits à cartes (3), tandis que, d'autre part, une mise hors service de la tête d'écriture (13) montée sur le même côté que celui du capteur est effectuée, dans le cas où ce capteur (14) n'identifie aucune bande magnétique (M).

2. Dispositif selon la revendication 1, caractérisé en ce que chaque fois des capteurs (13) opposés par paires sont disposés pour identifier des bandes magnétiques (M), dans la zone d'insertion du puits à cartes (3).

3. Dispositif selon la revendication 1 ou 2, caractérisé en ce que le capteur (14) est réalisé sous la forme de tête audio.

4. Dispositif selon au moins l'une des revendications 1 à 3, caractérisé en ce que la mise hors service de la tête d'écriture (13) respective est effectuée par le fait que sa ligne d'alimentation est interrompue à proximité immédiate de celle-ci.
